# EUROPÄISCHE PATENTSCHRIFT

(11) **EP 0 533 684 B1**
(45) Veröffentlichungstag und Bekanntmachung des Hinweises auf die Patenterteilung: **18.01.1995**
(21) Anmeldenummer: 91907911.1
(22) Anmeldetag: 26.04.1991
(51) Int. Cl.: H02K 9/19, H02K 11/00

(54) **ELEKTRISCHE MASCHINE, VORZUGSWEISE DREHSTROMGENERATOR FÜR FAHRZEUGE**
ELECTRIC MACHINE, PREFERABLY ROTARY CURRENT GENERATOR FOR VEHICLES
MACHINE ELECTRIQUE, EN PARTICULIER ALTERNATEUR A COURANT TRIPHASE POUR VEHICULES

(30) Priorität: 12.06.1990 DE 4018710
(43) Veröffentlichungstag der Anmeldung: 31.03.1993
(73) Patentinhaber: ROBERT BOSCH GMBH, 70442 Stuttgart (DE)
(72) Erfinder: PFLÜGER, Gerhard, D-7145 Markgröningen (DE); FAKLER, Bernhard, D-7300 Esslingen (DE); KLAUS, Susanne, D-7000 Stuttgart (DE); BÜRGER, Klaus-Georg, D-7145 Markgröningen 40 (DE)
(86) Internationale Anmeldenummer: DE9100351
(87) Internationale Veröffentlichungsnummer: WO9120119

(56) Entgegenhaltungen:
- EP-A- 0 062 706
- WO-A-89/02161
- DE-A- 1 903 175
- FR-A- 2 613 553
- FR-A- 2 629 287
- US-A- 3 793 544
- PATENT ABSTRACTS OF JAPAN, Bd. 12, Nr. 35 (E-579)(2882) 2. Februar 1988; & JP-A-62 189942, & US-A-4980588

## Beschreibung

### Stand der Technik

Die Erfindung geht aus von einer elektrischen Maschine, vorzugsweise einen Drehstromgenerator für Fahrzeuge nach dem Oberbegriff des Patentanspruchs 1. Aus der EP-A-0062706 ist eine solche Maschine bekannt.

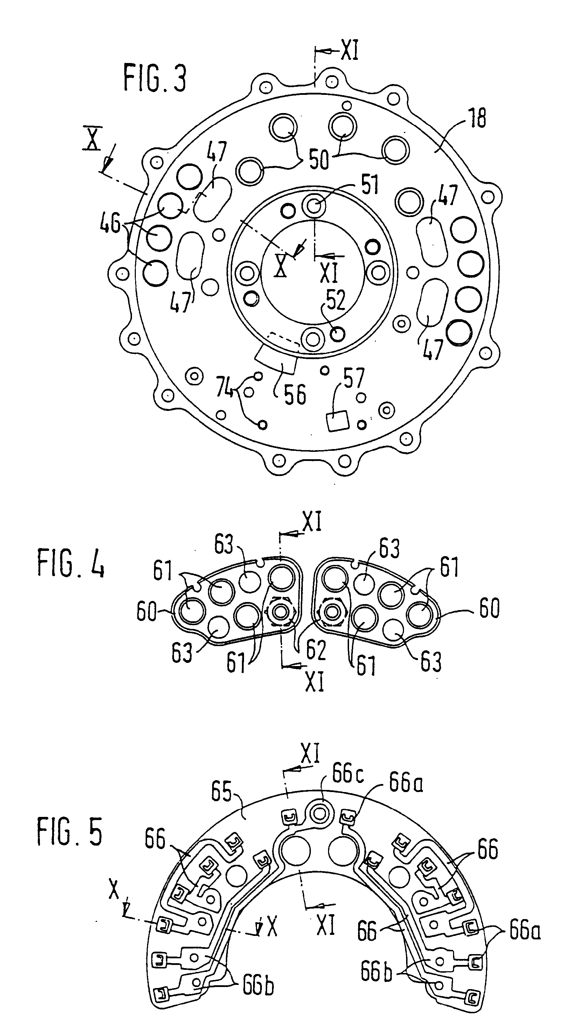

Aus der DE-OS 31 28 081 ist bereits ein Drehstromgenerator für Kraftfahrzeuge mit einem Doppel-Generatorsystem in einem geschlossenen, flüssigkeitsgekühlten Gehäuse bekannt (Figur 5), wobei die Antriebswelle beidseitig in zwei Lagerschilden aufgenommen ist. Dort ist ferner bekannt, die Gleichrichteranordnung mit dem Reglerschalter und den Maschinenanschlüssen am hinteren Lagerschild, auf der sogenannten B-Seite des Generators und die Keilriemenscheibe am vorderen Antriebswellenende auf der sogenannten A-Seite anzuordnen.

Bei elektrischen Maschinen, die zur Kühlung unmittelbar in eine topfförmge Ausnehmung des Antriebsaggregates eines Kraftfahrzeuges eingesetzt werden sollen, ist eine solche Lösung nicht möglich. Die B-Seite eines solchen Drehstromgenerators ist dazu von außen nicht mehr zugänglich, so daß dort keine Maschinenanschlüsse mehr angebracht werden können.

Es ist bereits bekannt, bei derartigen Drehstromgeneratoren für Kraftfahrzeuge ein topfförmiges Metallgehäuse zu verwenden und die Maschinenanschlüsse an dem A-seitigen Lagerdeckel auszuführen. Eine separate Anbringung und Verschaltung der Gleichrichtereinheiten und Reglerschalter für den Drehstromgenerator ist dann jedoch sehr aufwendig.

Mit der vorliegenden Lösung wird angestrebt, bei oberflächengekühlten elektrischen Maschinen mit zwei axial hintereinanderliegenden Drehstrom-Generatorsystemen die Gleichrichtereinheiten und Reglerschalter möglichst kompakt und gemeinsam mit den Anschlußklemmen an der elektrischen Maschine anzuordnen.

### Vorteile der Erfindung

Die erfindungsgemäße elektrische Maschine mit den kennzeichnenden Merkmalen des Patentanspruchs 1 hat den Vorteil, daß Reglerschalter, Gleichrichtereinheiten und flüssigkeitsgekühlter Drehstromgenerator mit topfförmigem Gehäuse zum Einbau in ein Antriebsaggregat oder dgl. als komplette Einheit hergestellt und vertrieben werden kann. Vorteilhaft ist ferner, daß dabei die in den Gleichrichtereinheiten und Reglerschaltern erzeugte Verlustwärme über den Lagerdeckel an die Flüssigkeitskühlung abgegeben werden kann und daß damit eine kompakte Bauweise erreicht wird.

Durch die in den Unteransprüchen aufgeführten Maßnahmen ergeben sich vorteilhafte Weiterbildungen und Verbesserungen der im Patentanspruch 1 angegebenen Merkmale.

### Zeichnung

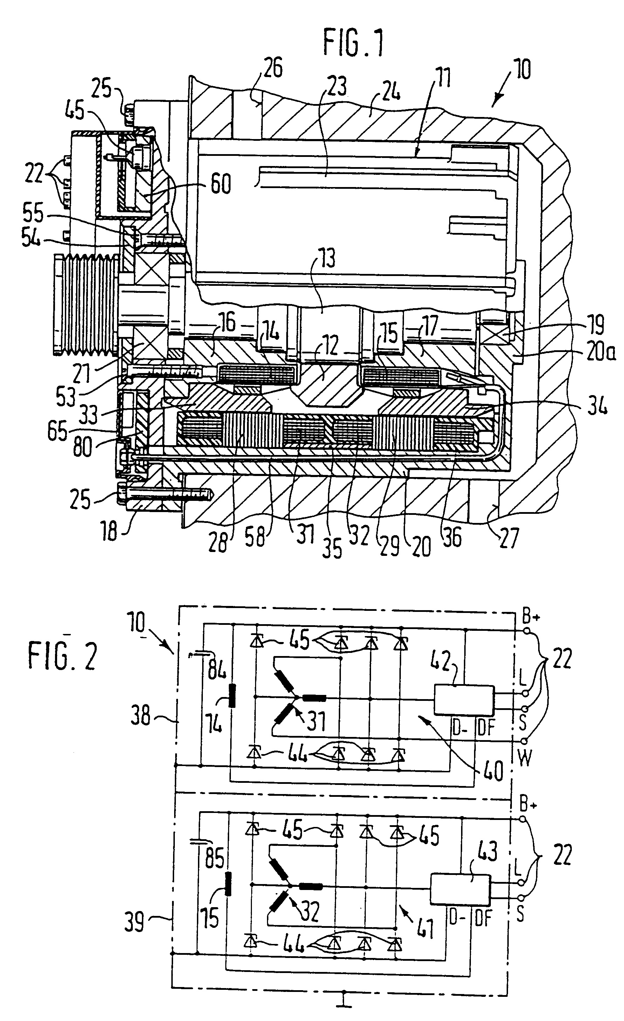

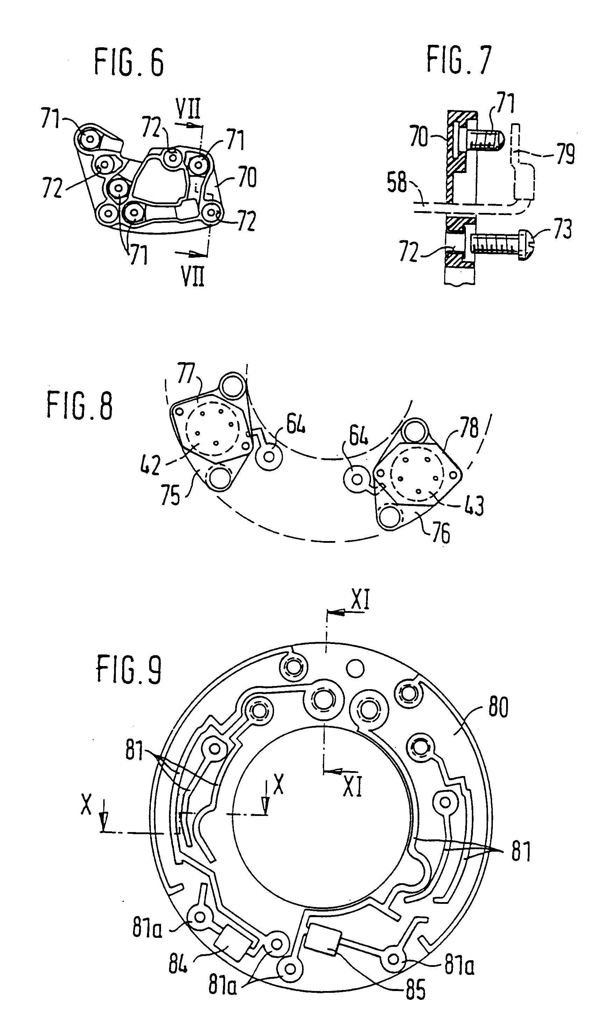

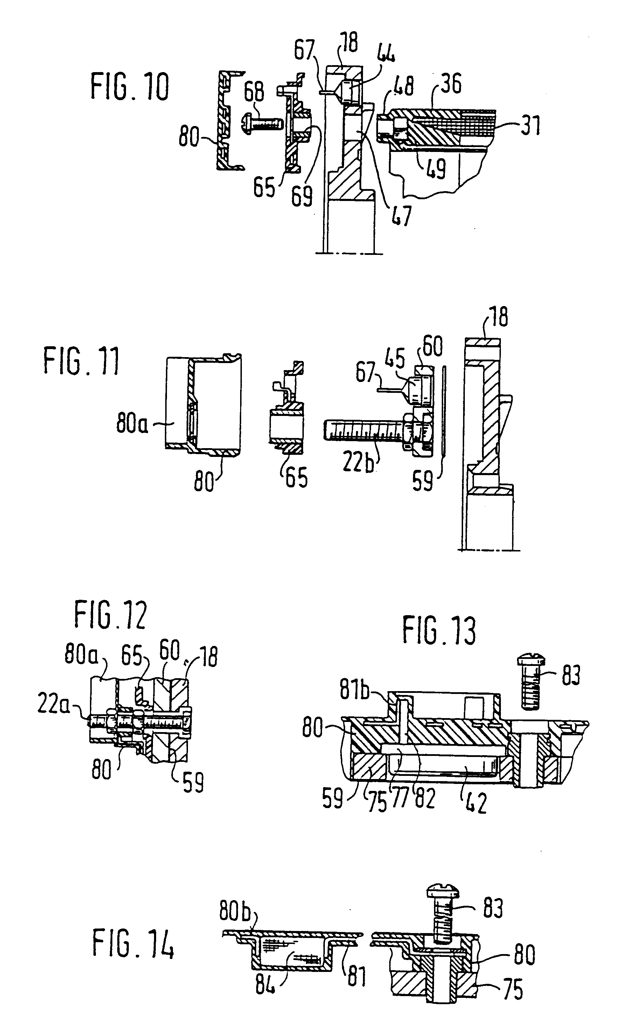

Ein Ausführungsbeispiel der Erfindung ist in der Zeichnung dargestellt und in der nachfolgenden Beschreibung näher erläutert. Es zeigen Figur 1 einen Drehstromgenerator für Kraftfahrzeuge mit zwei Generator-Systemen, teilweise im Querschnitt und verkleinerter Darstellung, Figur 2 zeigt den Schaltungsaufbau der beiden Generator-Systeme, Figur 3 zeigt einen Lagerdeckel der Maschine nach Figur 1 in der Vorderansicht, Figur 4 zeigt nebeneinanderliegende Plus-Kühlkörper, Figur 5 zeigt eine Stromschienenplatte für zwei Gleichrichtereinheiten im Lagerdeckel nach Figur 3, Figur 6 zeigt eine Anschlußplatte für die Erregerwicklungen am Lagerdeckel, Figur 7 einen Schnitt nach VII-VII aus Figur 6 in vergrößerter Darstellung, Figur 8 zeigt zwei mit Abstand voneinander am Lagerdeckel montierbare Reglerschalter, Figur 9 zeigt einen auf den Lagerdeckel zu montierenden Stromschienendeckel, die Figuren 10 und 11 zeigen Ständereinheit, Lagerdeckel, Plus-Kühlkörper, Stromschienenplatte und Stromschienendeckel vor dem Zusammenbau im Querschnitt nach der Linie X-X und XI-XI aus Figur 3, 4, 5 und 9, Figur 12 zeigt einen Schnitt am komplett montierten Lagerdeckel in Höhe einer Anschlußschraube, Figur 13 zeigt einen Schnitt am Stromschienendeckel nach Figur 9 mit integriertem Reglerschalter nach Figur 8 in vergrößerter Darstellung und Figur 14 zeigt einen weiteren Schnitt des Stromschienendeckels im Kondensator-Bereich in vergrößerter Darstellung.

### Beschreibung des Ausführungsbeispiels

In Figur 1 ist ein Drehstromgenerator zur Stromversorgung von Kraftfahrzeugen, Baumaschinen und dgl. mit 10 bezeichnet. Er besteht aus einem Ständer 11, auch Stator genannt, einem Doppel-Leitstückläufer 12 in Klauenpolausführung, der auf einer Antriebswelle 13 befestigt ist, sowie aus zwei Erregerwicklungen 14, 15, welche auf zwei Polringen 16, 17 angeordnet und am Ständer 11 bzw. an einem vorderen Lagerdeckel 18 befestigt sind. Das hintere Ende der Antriebswelle 13 ist in einem ersten Kugellager 19 am Boden 20a eines topfförmigen Metallgehäuses 20 des Generators 10 aufgenommen. Auf der Antriebsseite (A-Seite) ist die Antriebswelle 13 über ein weiteres Kugellager 21 im Lagerdeckel 18 aufgenommen, der das Metallgehäuse 20 zur Antriebsseite hin abschließt und der die elektrischen Anschlüsse 22 des Drehstromgenerators 10 sowie eine weiter unten erläuterte Gleichrichter- und Regleranordnung trägt. Der flüssigkeitsgekühlte Drehstromgenerator ist außen am Metallgehäuse 20 mit Abstandsrippen 23 versehen, welche zur Führung der Kühlflüssigkeit dienen und wird - wie angedeutet - in eine entsprechend gestaltete topfförmige Ausnehmung am Aggregat 24 des Fahrzeugs eingesetzt und durch Schrauben 25 daran befestigt. Die Kühlflüssigkeit wird über eine Einlaufbohrung 26 zur Außenfläche des Metallgehäuses 20 geführt, um die im Generator 10 erzeugte Wärme aufzunehmen und über eine Auslaufbohrung 27 in den Kühlkreislauf der Maschine abzuführen.

Der Ständer 11 des Drehstromgenerators 10 enthält zwei axial hintereinanderliegende Blechpakete 28, 29, in deren Nuten jeweils Drehstromwicklungen 31, 32 als sogenannte Ständerwicklungen eingelegt und miteinander im Stern verschaltet sind. Die Drehstromwicklungen 31, 32 wirken jeweils mit dem Doppel-Leitstückläufer 12 zusammen, der zwei Klauenpolsysteme 33, 34 aufweist. Die zwei Ständerblechpakete 28, 29 werden durch einen Metall-Distanzring 35 zueinander auf Abstand gehalten und um eine halbe Nutteilung gegeneinander versetzt positioniert. Sie sind zusammen mit den Wickelköpfen der Drehstromwicklungen 31, 32 in einem wärmeleitenden Kunststoff 36 zu einer vorgefertigten Baueinheit eingebettet.

Figur 2 zeigt die elektrische Verschaltung des Drehstromgenerators 10 mit seinen zwei voneinander unabhängigen Drehstrom-Systemen 38, 39 mit jeweils einer Gleichrichtereinheit 40, 41 und einem Reglerschalter 42, 43 und deren Anschlußklemmen 22 mit den Standardbezeichnungen B+, L, S und W, wobei die B+ Klemmen in bekannter Weise (EP 0 232 828 A2) auf zwei separate Akkumulatorbatterien von je 12 Volt geschaltet werden können, welche wahlweise für 12 V oder 24 V-Verbraucher parallel bzw. in Reihe geschaltet werden. Durch ein zusätzliches, in den Generator eingelegtes Metallteil kann zwischen den beiden B+ Klemmen gegebenenfalls eine Brücke erzeugt werden. Das Metallgehäuse 20 des Drehstromgenerators 10 ist hier auf Masse-Potential gelegt, so daß alle Minus-Dioden 44 der beiden Gleichrichtereinheiten 40, 41 anodenseitig auf Masse liegen und alle Plus-Dioden 45 kathodenseitig mit den B+ Anschlußklemmen 22 verbunden sind. Dieses Beispiel entspricht einer Schaltung mit gemeinsamem Minus-Massepunkt. Für eine Reihenschaltung der Einzelsysteme mit Erdung der elektrischen Mitte sind dagegen von dem einen System die Minus-Dioden und vom anderen System die Plus-Dioden mit der Gehäusemasse zu verbinden.

Die konkrete Anordnung und Verschaltung der Gleichrichtereinheiten 40, 41, der Reglerschalter 42, 43 sowie der Drehstrom- und Erregerwicklungen 31, 32 bzw. 14, 15 am Lagerdeckel 18 des Drehstromgenerators 10 wird mit Hilfe der übrigen Figuren nunmehr näher erläutert.

In Figur 3 ist der Lagerdeckel 18 als Einzelteil in der Sicht von vorn dargestellt. Er ist mit Bohrungen 46 zum Einpressen der Minus-Dioden 44 versehen, die am äußeren Rand des Lagerdeckels 18 gemäß Figur 10 nebeneinander in zwei Gruppen von jeweils vier Minus-Dioden 44 angeordnet sind. Konzentrisch dazu liegen weiter innen jeweils zwei längliche Ausnehmungen 47, in die gemäß Figur 10 jeweils ein Kragen 48 des die Wickelköpfe der Drehstromwicklungen 31, 32 einbettenden Kunststoffs 36 eingreift. In diesen insgesamt vier Krägen 48 sind jeweils paarweise die Anschlüsse der beiden Drehstromwicklungen 31, 32 in Form von Gewindebuchsen 49 korrosionsgeschützt eingebettet. Im oberen Teil des Lagerdeckels 18 sind fünf weitere Bohrungen 50, in welche Anschlußschrauben 22a gemäß Figur 12 isoliert eingesetzt werden. Diese Anschlußschrauben 22a bilden hierbei die Anschlußklemmen L, S und W nach Figur 2. Des weiteren sind im Lagerbereich je vier Bohrungen 51, 52 vorhanden, durch welche gemäß Figur 1 der Lagerdeckel 18 durch Schrauben 53 bzw. ein Lager-Abdeckring 54 mit Schrauben 55 jeweils am Polring 16 befestigt wird. Auf der unteren Hälfte des Lagerdeckels 18 befinden sich Aussparungen 56, 57, durch welche die Anschlußleitungen 58 (Figur 1) je einer Erregerwicklung 14, 15 hindurchgeführt werden.

Auf den so vorgefertigten Lagerdeckel 18 wird eine wärmeleitende dünne ringförmige Isolierstoffolie 59 (in Figur 11 erkennbar) aufgelegt und im oberen Bereich des Lagerdeckels 18 werden zwei in Figur 4 dargestellte Plus-Kühlkörpet 60 angeordnet. In je vier Bohrungen 61 der Plus-Kühlkörper 60 werden die Plus-Dioden 45 eingepreßt (Figur 11) und je eine weitere Anschlußschraube 22b wird als B+ Klemme 22 in je eine weitere entsprechend ausgebildete Bohrung 62 mit Sechskant-Ausnehmung festgeschraubt. Zwei weitere Bohrungen 63 dienen zur Befestigung der Plus-Kühikötper 60 auf dem Lagerdeckel 18, indem dort je zwei der Anschlußschrauben 22a gemäß Figur 12 isoliert durchgeführt werden.

Figur 5 zeigt die untere von zwei übereinanderliegenden Leiterplatten, welche als Stromschienenplatte 65 ausgebildet ist und ringabschnittförmig die nebeneinanderliegenden Minus-Dioden 44 und Plus-Kühlkörper 60 mit den Plus-Dioden 45 als Gleichrichtereinheiten 40, 41 abdeckt. Die Platte 65 enthält Stromschienen 66, die hier in durchsichtigem Isolierstoff eingebettet dargestellt sind. Diese Stromschienen 66 verbinden die Plus- und Minus-Dioden 44, 45 jeweils paarweise miteinander, indem die Anschlußpins 67 der Dioden 44, 45 jeweils mit den klauenförmigen Enden 66a der Stromschienen 66 verschweißt werden. Die Stromschienen 66 werden außerdem an ihren Bereichen 66b mit den Gewindebuchsen 49 je einer Phase der Drehstromwicklungen 31, 32 mittels Schrauben 68 und Metallhülse 69 kontaktiert (Figur 10).

Im Bereich 66c wird eine der Leiterbahnen 66 mit der Anschlußschraube 22a für die W-Anschlußklemme der Maschine kontaktiert.

Figur 6 und 7 zeigen eine im unteren Bereich des Lagerdeckels 18 angeordnete aus Isolierstoff gespritzte Anschlußplatte 70, in die vier Gewindebolzen 71 für die Enden 79 der Anschlußleitungen 58 - wie gestrichelt angedeutet - der beiden Erregerwicklungen 14, 15 verankert sind. Über vier versenkte Bohrungen 72 wird die Anschlußplatte 70 mittels Schrauben 73 in Gewindebohrungen 74 am Lagerdeckel 18 festgeschraubt.

In Figur 8 sind zwei Reglereinheiten dargestellt, die mit Abstand zueinander auf der unteren Hälfte des Lagerdeckels in der gestrichelt angedeuteten Kontur angeordnet sind, so daß zwischen ihnen die Anschlußplatte 70 Platz findet. Sie liegen räumlich jeweils neben der ihr zugeordneten Gleichrichtereinheit, d.h. jeweils unterhalb der Minus-Dioden 44. Die Reglerschalter 42, 43 sind jeweils in eine Ausnehmung einer Kühlplatte 75, 76 eingesetzt und über eine Bodenplatte 77, 78 damit vernietet. Die beiden Kühlplatten 75, 76 liegen unmittelbar oberhalb der Isolierstoffolie 59 auf dem Lagerdeckel 18, so daß die in den Reglerschalter 42, 43 entwickelte Verlustwärme über den Lagerdeckel 18 abgeführt werden kann. Ein DF-Anschluß 64 der Reglerschalter 42, 43 ist jeweils am Reglergehäuse angeschweißt und wird beim Zusammenbau über je einen Gewindebolzen 71 mit einem Erregerwicklungsanschluß kontaktiert.

Figur 9 zeigt die obere der beiden übereinanderliegenden Leiterplatten, die als Stromschienendeckel 80 ausgebildet ist. Im Kunststoff des Stromschienendeckels 80 sind hier sichtbar dargestellte Stromschienen 81 eingebettet, über welche die Anschlußschrauben 22a und 22b der Maschinenanschlüsse B+, L und S mit den entsprechenden Anschlüssen der Reglerschalter 42, 43 elektrisch zu verbinden sind. Da die Anschlußplatte 70 (Figur 6 und 7) zwischen den beiden Reglerschaltern 42, 43 auf dem Lagerdeckel 18 festgeschraubt ist, werden auch die Anschlußleitungen 58 der Erregerwicklungen 14, 15 über die Gewindebolzen 71 an Endbereichen 81a jeweils einer der Stromschienen 81 im Stromschienendeckel 80 kontaktiert und über diese Stromschienen 81 mit den entsprechenden Anschlußpins 82 der Reglerschalter 42, 43 verbunden.

Figur 13 zeigt, daß die Reglerschalter 42, 43 dabei zunächst mit den jeweiligen Enden 81b der Stromschienen 81 verschweißt werden, bevor diese mit dem Kunststoff des Stromschienendeckels 80 umspritzt werden. Der B+ Anschluß der beiden Drehstromsysteme 38, 39 wird dabei jeweils über eine der Stromschienen 81 mit je einem Anschluß der Erregerwicklungen 14, 15 und mit dem B+ Anschluß des jeweiligen Reglerschalters 42, 43 elektrisch verbunden. Die beiden Reglerschalter 42, 43 sind mit ihren Kühlplatten 75, 76 am Stromschienendeckel 80 fest angeordnet, der über Schrauben 83 im unteren Bereich und durch die Anschlußschrauben 22a und 22b im oberen Bereich auf dem Lagerdeckel 18 festgeschraubt wird. Außerdem ist jeweils ein Kondensator 84, 85 für jeden der beiden Reglerschalter 42, 43 im Stromschienendeckel 80 eingegossen und über die Stromschienen 81 zwischen einem B+ und D- Anschluß des ihm zugeordneten Reglerschalters 42, 43 geschaltet. Einer der Anschlüsse wird dabei gemäß Figur 14 mittels einer Schraube 83 am Lagerdeckel 18 verschraubt und damit auf Masse gelegt, während der andere Anschluß mit einer Anschlußleitung der entsprechenden Erregerwicklung kontaktiert wird.

Aus den Figuren 1, 9 bis 11 ist erkennbar, daß der Stromschienendeckel 80 als die obere der beiden übereinanderliegenden Leiterplatten ringförmig ausgebildet ist, und dabei die halbkreisförmige Stromschienenplatte 65 sowie die Reglerschalter 42, 43 und die Anschlußplatte 70 mit den Anschlußenden der Erregerwicklungen 14, 15 abdeckt. Ferner ist aus diesen Figuren erkennbar, daß der Lagerdeckel 18 die Anschlüsse 49 der Drehstromwicklungen 31, 32 sowie die Anschlußenden 79 der Erregerwicklungen 14, 15 aufnimmt und daß diese Anschlüsse mit den auf dem Lagerdeckel 18 angeordneten Gleichrichtereinheiten 40, 41 aus Minus- und Plus-Dioden 44, 45 sowie mit den Reglerschaltern 42, 43 und den Anschlußklemmen 22 der Maschine über die im Isolierstoff eingebetteten Stromschienen 66, 81 elektrisch verbunden sind. Schließlich sind die Anschlüsse der Drehstromwicklungen und Erregerwicklungen sowie die Gleichrichtereinheiten und Reglerschalter nach außen von dem am Lagerdeckel 18 befestigten Stromschienendeckel 80 abgedeckt. Die Anschlußschrauben 22a und 22b werden dabei von einem Kragen 80a des Stromschienendeckels 80 eingefaßt. Zur Abschirmung elektromagnetischer Störungen ist es zweckmäßig, mindestens eine der beiden Oberflächen, vorzugsweise die äußere Oberfläche des Stromschienendeckels 80 - wie in Figur 14 angedeutet - mit einer elektrisch leitfähigen Schicht 80b zu versehen und diese mit dem Gehäuse 20 als elektrische Masse zu verbinden.

## Patentansprüche

1. Elektrische Maschine, vorzugsweise Drehstromgenerator (10) für Fahrzeuge, mit Anschlußklemmen (22) und einem flüssigkeitsgekühlten Metallgehäuse (20), in dem mindestens ein Ständerblechpaket (28) mit in dessen Nuten eingelegte Drehstromwicklungen (31) eingesetzt sind, die mit mindestens einem umlaufenden, auf einer Antriebswelle (13) befestigten Klauenpolläufer (12) mit einer Erregerwicklung (14) zusammenwirken, wobei die Antriebswelle (13) einerseits am Boden (20a) des Metallgehäuses (20) und andererseits auf der Antriebsseite der Maschine an einem das Metallgehäuse (20) abschließenden Lagerdeckel (18) gelagert ist, wobei das Ende der Antriebswelle frei nach außen ragt, dadurch gekennzeichnet,
a) daß das Metallgehäuse (20) mitsamt dem Boden (20a) derart topfförmig ausgebildet ist, daß in ihm zwei mit Abstand axial hintereinanderliegende Ständerblechpakete (28,29) mit ihren Drehstromwicklungen (31, 32) eingesetzt sind, die mit zwei auf der Antriebswelle (13) angeordneten Klauenpolläufern, (12,33,34) und zwei Erregrwicklungen (14, 15) zusammenwirken,
b) daß der antriebsseitige Lagerdeckel (18) die Anschlüsse (49) der beiden Drehstromwicklungen (31, 32) sowie die Anschlüsse (79) der beiden Erregerwicklungen (14, 15) aufnimmt und
c) daß diese Anschlüsse mit an diesem Lagerdeckel (18) angeordneten Gleichrichtereinheiten (40, 41, 44, 45), mit Minus- und Plus-Dioden (44, 45) sowie zwei den beiden Erregerwicklungen (14, 15) getrennt zugeordneten Reglerschaltern (42, 43) und Anschlußklemmen (22) der Maschine elektrisch verbunden sind.

2. Elektrische Maschine nach Anspruch 1, dadurch gekennzeichnet, daß die Anschlüsse (49) der beiden Drehstromwicklungen (31, 32) jeweils in zwei Gruppen von als Anschlußteile dienenden Gewindebuchsen zusammengefaßt sind, die in Kragen (48) eines die Wickelköpfe der Drehstromwicklungen (31, 32) umschließenden, wärmeleitenden Kunststoff (36) eingebettet sind, wobei die Kragen (48) jeweils in eine entsprechende Ausnehmung (47) des Lagerdeckels (18) eingreifen.

3. Elektrische Maschine nach Anspruch 1 oder 2, dadurch gekennzeichnet, daß die Minus-Dioden (44) der Gleichrichtereinheiten (40, 41) im Lagerdeckel (18) und die Plus-Dioden (45) in einem Plus-Kühlkörper (60) eingepreßt sind, der wärmeleitend und elektrisch isoliert außen auf dem Lagerdeckel (18) befestigt ist und daß sie zu ihrer elektrischen Verbindung mit den Anschlüssen (49) der Drehstromwicklungen (31, 32 und 79) der Erregerwicklungen (14, 15) sowie den Anschlußklemmen (22) und Reglerschaltern (42, 43) nach außen von mindestens einer am Lagerdeckel (18) befestigen Leiterplatte (65, 80) abgedeckt sind.

4. Elektrische Maschine nach Anspruch 3, dadurch gekennzeichnet, daß die Anschlüsse (49) der beiden Drehstromwicklungen (31, 32) über zwei voneinander elektrisch getrennte Gleichrichereinheiten (40, 41) aus Gruppen von Minus- und Plus-Dioden (44, 45) einerseits und die Anschlüsse (79) der Erregerwicklungen (14, 15) über voneinander elektrisch getrennte Reglerschalter (42, 43) andererseits gemeinsam mit den elektrisch voneinander getrennten Anschlußklemmen (22) der Maschine auf den Lagerdeckel (18) angeordnet sind, wobei die Gruppen der Minus-Dioden (44) am äußeren Umfangsbereich in entsprechende Bohrungen (46) des Lagerdeckels (18) als Minus-Kühlkörper und die Gruppen der Plus-Dioden (45) in entsprechende Bohrungen (61) zweier Plus-Kühlkörper (60) eingepreßt sind.

5. Elektrische Maschine nach einem der vorherigen Ansprüche, dadurch gekennzeichnet, daß neben den beiden Gleichrichtereinheiten (40, 41) die beiden Reglerschalter (42, 43) mit Abstand zueinander auf je einer Kühlplatte (75, 76) sitzen, die wärmeleitend und elektrisch isoliert auf dem Lagerdeckel (18) aufliegt.

6. Elektrische Maschine nach Anspruch 5, dadurch gekennzeichnet, daß zwischen den beiden Kühlplatten (75, 76) der Reglerschalter (42, 43) eine Anschlußplatte (70) aus Isolierstoff auf dem Lagerdeckel (18) befestigt ist, welche für die Anschlußenden (79) der beiden Erregerwicklungen (14, 15) Gewindebolzen (71) trägt, die über Leiterbahnen (81) einer der Leiterplatten (65, 80) mit den Reglerschaltern (42, 43) elektrisch verbunden sind.

7. Elektrische Maschine nach einem der vorherigen Ansprüche, dadurch gekennzeichnet, daß die beiden Plus-Kühlkörper (60) nebeneinander auf dem Lagerdeckel (18) angeordnet sind und je eine Anschlußschraube (22b) als B+ Anschlußklemme (22) tragen, die über eine der Leiterplatten (65, 80) mit je einem Anschluß (79) der beiden Erregerwicklungen (14, 15) und mit einem B+ Anschluß je eines Reglerschalters (42, 43) elektrisch verbunden sind.

8. Elektrische Maschine nach einem der vorherigen Ansprüche, dadurch gekennzeichnet, daß die untere von zwei übereinanderliegenden Leiterplatten (65, 80) als Stromschienenplatte (65) ausgebildet ist, welche die beiden nebeneinanderliegenden Gleichrichtereinheiten (40, 41) abdeckt und die Stromschienen (66) enthält, welche die Plus- und Minus-Dioden (44, 45) der Gleichrichtereinheiten (40, 41) jeweils paarweise miteinander und mit dem Anschluß je einer Phase der Drehstromwicklungen (31, 32) verbinden.

9. Elektrische Maschine nach Anspruch 8, dadurch gekennzeichnet, daß die obere der beiden übereinanderliegenden Leiterplatten als Stromschienendeckel (80) ausgebildet ist, der die halbkreisförmige Stromschienenplatte (65) sowie die Reglerschalter (42, 43) und die Anschlußplatte (70) mit den Anschlußenden (79) der Erregerwicklungen (14, 15) abdeckt und der Stromschienen (81) enthält, welche die Reglerschalter (42, 43) mit den entsprechenden Anschlußklemmen (22) der Maschine und mit den Anschlüssen der Erregerwicklung (14, 15) verbinden.

10. Elektrische Maschine nach Anspruch 9, dadurch gekennzeichnet, daß die beiden Reglerschalter (42, 43) mit ihren Kühlplatten (75, 76) am Stromschienendeckel (80) befestigt sind.

11. Elektrische Maschine nach Anspruch 10, dadurch gekennzeichnet, daß die Anschlußklemmen(22) der Maschine als Anschlußschrauben (22a, 22b) ausgebildet sind, die mit Ausnahme der B+ Anschlüsse und dem W-Anschluß im Lagerdeckel (18) isoliert eingesetzt und mit zu den Reglerschaltern (42, 43) führenden Stromschienen (81) des Stromschienendeckels (80) verbunden sind.

12. Elektrische Maschine nach Anspruch 9, dadurch gekennzeichnet, daß jeweils ein Kondensator (84, 85) für jeden der beiden Reglerschalter (42, 43) im Stromschienendeckel (80) eingegossen ist, der über Stromschienen (81) zwischen einem B+ und D- Anschluß der Reglerschalter (42, 43) geschaltet ist.

13. Elektrische Maschine nach einem der Ansprüche 8 bis 12, dadurch gekennzeichnet, daß mindestens einer der zwei Oberflächen des Stromschienendeckels (80) mit einer leitfähigen Schicht (80b) versehen ist und diese mit der elektrischen Masse (Gehäuse 20) der Maschine verbunden ist.

## Claims

1. Electric machine, preferably three-phase alternator (10) for vehicles, having alternator connection terminals (22) and a liquid-cooled metal housing (20) in which at least one laminated stator core (28) with three-phase current windings (31) inserted in its slots is placed, which three-phase current windings (31) interact with at least one rotating claw pole rotor (12) which is attached to a drive shaft (13) and has an exciter winding (14), the drive shaft (13) being mounted on the one hand on the floor (20a) of the metal housing (20) and on the other hand on the drive side of the machine on a bearing cover (18) which closes off the metal housing (20), the end of the drive shaft projecting freely outwards, characterized in that,
a) the metal housing (20) together with the floor (20a) are of pot-shaped design such that two laminated stator cores (28, 29) which are arranged axially one behind the other with spacing and have three-phase current windings (31, 32) are placed in it, the said three-phase current windings (31, 32) interacting with two claw pole rotors (12, 33, 34) arranged on the drive shaft (13) and two exciter windings (14, 15),
b) in that the drive-side bearing cover (18) receives the terminals (49) of the two three-phase current windings (31, 32) and the terminals (79) of the two exciter windings (14, 15) and
c) in that these terminals are electrically connected to rectifier units (40, 41, 44, 45) arranged on this bearing cover (18), to negative and positive diodes (44, 45) and to two controller switches (42, 43) which are separately assigned to the two exciter windings (14, 15) and connection terminals (22) of the machine.

2. Electric machine according to Claim 1, characterized in that the terminals (49) of the two three-phase current windings (31, 32) are each combined into two groups of threaded bushings which serve as connection components and are embedded in collars (48) of a heat-conducting plastic (36) which encloses the winding heads of the three-phase current windings (31, 32), the collars (48) each engaging in a corresponding recess (47) of the bearing cover (18).

3. Electric machine according to Claim 1 or 2, characterized in that the negative diodes (44) of the rectifier units (40, 41) are impressed in the bearing cover (18) and the positive diodes (45) are impressed in a positive heat sink (60) which is attached in a heat-conducting and electrically insulated fashion to the outside of the bearing cover (18), and in that, to connect them electrically to the terminals (49) of the three-phase current windings (31, 32 and 79) of the exciter windings (14, 15) and the connection terminals (22) and controller switches (42, 43), they are covered on the outside by at least one printed circuit board (65, 80) which is attached to the bearing cover (18).

4. Electric machine according to Claim 3, characterized in that on the one hand the terminals (49) of the two three-phase current windings (31, 32) and on the other hand the terminals (79) of the exciter windings (14, 15) are arranged together with the connection terminals (22) of the machine which are electrically isolated from one another on the bearing cover (18), the terminals (49) of the two three-phase current windings (31, 32) being connected via two rectifier units (40, 41) which are electrically isolated from one another and consist of groups of negative and positive diodes (44, 45) and the terminals (79) of the said exciter windings (14, 15) being connected via control switches (42, 43) which are electrically isolated from one another and the groups of negative diodes (44) being impressed at the outer circumferential area into corresponding holes (46) of the bearing cover (18) as negative heat sinks and the groups of positive diodes (45) being impressed into corresponding holes (61) of two positive heat sinks (60).

5. Electric machine according to one of the preceding claims, characterized in that, in addition to the two rectifier units (40, 41), the two controller switches (42, 43) are seated at a distance from one another on in each case one cooling plate (75, 76) which rests in a heat-conducting and electrically isolated fashion on the bearing cover (18).

6. Electric machine according to Claim 5, characterized in that a connection plate (70) of insulating material is attached on the bearing cover (18) between the two cooling plates (75, 76) of the control switches (42, 43), which connection plate (70) bears threaded bolts (71) for the connection ends (79) of the two exciter windings (14, 15), which threaded bolts (71) are electrically connected to the control switches (42, 43) via conductor tracks (81) of one of the printed circuit boards (65, 80).

7. Electric machine according one of the preceding claims, characterized in that the two positive heat sinks (60) are arranged one next to the other on the bearing cover (18) and each bear a connection screw (22b) as B+ connection terminal (22), which connection screws (22b) are electrically connected via one of the printed circuit boards (65, 80) to in each case one terminal (79) of the two exciter windings (14, 15) and to a B+ terminal of in each case one controller switch (42, 43).

8. Electric machine according to one of the preceding claims, characterized in that the lower printed circuit board of two printed circuit boards (65, 80) which lie one on top of the other is designed as a busbar plate (65) which covers the two rectifier units (40, 41) lying one on top of the other and contains the busbars (66) which connect the positive and negative diodes (44, 45) of the rectifier units (40, 41) to one another in pairs in each case and to the terminal of one phase of each of the three-phase current windings (31, 32).

9. Electric machine according to Claim 8, characterized in that the upper printed circuit board of the two printed circuit boards which lie one on top of the other is designed as a busbar cover (80) which covers the semicircular busbar plate (65) and the controller switches (42, 43) and the connection plate (70) with the connection ends (79) of the exciter windings (14, 15) and which contains busbars (81) which connect the controller switches (42, 43) to the corresponding connection terminals (22) of the machine and to the terminals of the exciter winding (14, 15).

10. Electric machine according to Claim 9, characterized in that the two controller switches (42, 43) are attached with their cooling plates (75, 76) to the busbar cover (80).

11. Electric machine according to Claim 10, characterized in that the connection terminals (22) of the machine are designed as connection screws (22a, 22b) which are inserted in insulated fashion with the exception of the B+ terminals and the W terminal in the bearing cover (18) and are connected to busbars (81), leading to the control switches (42, 43), of the busbar cover (80).

12. Electric machine according to Claim 9, characterized in that in each case one capacitor (84, 85) for each of the two controller switches (42, 43) is cast in the busbar cover (80) and is connected via busbars (81) between a B+ and D terminal of the control switches (42, 43).

13. Electric machine according to one of Claims 8 to 12, characterized in that at least one of the two surfaces of the busbar cover (80) is provided with a conductive layer (80b) and the latter is connected to the electrical earth (housing 20) of the machine.

## Revendications

1. Machine électrique, notamment alternateur (10) pour véhicule automobile avec des bornes de branchement (22) et un boîtier métallique (20) rempli de liquide de refroidissement dans lequel est installé au moins un paquet de tôles du stator avec ses bobinages (31) intégrés dans ses rainures qui coopèrent avec au moins un rotor à griffes polaires avec un enroulement d'excitation (14) fixé sur un arbre d'entraînement (13) rotatif, l'arbre d'entraînement (13) étant positionné d'un côté dans un palier dans le fond (20a) du boîtier métallique (20) et de l'autre côté, du côté de l'entraînement de la machine, dans le couvercle de palier (18) fermant le boîtier métallique (20), l'extrémité de l'arbre d'entraînement venant librement en saillie vers l'extérieur, caractérisée en ce que :
a) le boîtier métallique (20) avec le fond (20a) est réalisé en forme de pot de façon à recevoir deux paquets de tôles du stator (28, 29) l'un derrière l'autre et espacés axialement avec leurs enroulements de champ (31, 32) qui coopèrent avec deux rotors à griffes polaires (12, 33, 34) disposés sur l'arbre d'entraînement et deux bobinages d'excitation (14, 15),
b) le couvercle de palier (18) situé du côté de l'entraînement comporte les bornes (49) des deux enroulements de champ (31, 32) ainsi que les bornes (79) des deux enroulements d'excitation (14, 15),
c) ces bornes sont reliées avec les éléments redresseurs (40, 41, 44, 45) avec les diodes moins et plus (44, 45) montées sur ce couvercle de palier (18) ainsi qu'avec les deux régulateurs (42, 43) associés séparément aux enroulements d'excitation (14, 15) et aux bornes (22) de la machine.

2. Machine électrique selon l'invention, caractérisée en ce que les bornes (49) des deux bobinages (31, 32) sont à chaque fois regroupées en deux groupes de douilles filetées servant de bornes qui sont noyées dans des collerettes (48) de l'une des têtes filetées en matière plastique conductrice de chaleur (36) entourant les têtes des enroulements de champs (31, 32), les collerettes (48) étant chacune en prise dans un évidement correspondant (47) du couvercle de palier (18).

3. Machine électrique selon l'une des revendications 1 ou 2, caractérisé en ce que les diodes moins (44) des éléments redresseurs sont insérées par pression dans le couvercle de palier (18) et les diodes plus (45) sont insérées par pression dans un corps de refroidissement plus (60) qui est fixé, de manière conductrice de chaleur et électriquement isolé extérieurement, sur le couvercle de palier (18) et en ce qu'ils sont recouverts d'au moins une plaque de circuit imprimé (65, 80) fixée au couvercle de palier (18) pour leur liaison électrique avec les bornes (49) des enroulements de champ (31, 32) et (79) des enroulements d'excitation (14, 15) ainsi que les bornes de branchement (22) des régulateurs (42, 43).

4. Machine électrique selon la revendication 3, caractérisée en ce que les branchements (49) des deux enroulements de champ (31, 32) et les branchements (79) des enroulements d'excitation (14, 15) sont montés sur le couvercle de palier (18)avec les bornes de branchement (22) de la machine, les branchements des enroulements de champ y étant reliés aux deux éléments redresseurs (40, 41) séparés électriquement l'un de l'autre composés de groupes de diodes moins et plus (44, 45), d'une part, tandis que d'autre part les branchements (79) des enroulements d'excitation (14, 15) y sont reliés aux régulateurs (42, 43) et en ce que des groupes de diodes moins (44) sont introduits par pression dans des perçages correspondants de la zone périphérique extérieure du couvercle de palier (18), en tant que corps de refroidissement moins, alors que les groupes de diodes plus (45) sont introduits par pression dans les perçages correspondants de deux corps de refroidissement plus (60).

5. Machine électrique selon l'une des revendications précédentes, caractérisée en ce que près des deux éléments redresseurs (40, 41), les deux régulateurs (42, 43) sont montés séparés sur une plaque de refroidissement (75, 76) qui s'appuie de manière conductrice de la chaleur et isolée électriquement, sur le couvercle de palier (18).

6. Machine électrique selon la revendication 5, caractérisée en ce qu'entre les plaques de refroidissement (75, 76) des régulateurs (42, 43) est fixée, sur le couvercle de palier (18), une plaque de liaison (70) en matière isolante, plaque qui porte des boulons filetés (71) pour les extrémités de branchement des deux enroulements d'excitation (14, 15) boulons qui sont reliés par des chemins conducteurs d'une plaque de circuit imprimé (65, 80) avec le régulateur (42, 43).

7. Machine électrique selon l'une des revendications précédentes, caractérisée en ce que les deux corps de refroidissement plus (60) sont montés côte à côte sur le couvercle de palier (18) et portent chacun une vis de branchement (22b) en tant que borne de branchement B+ (22) ces vis étant reliées par les plaques de circuit imprimé (65) l'une avec un branchement respectif (79) des deux bobinages d'excitation (14, 15) et l'autre avec un branchement B+ d'un régulateur (42, 43).

8. Machine électrique selon l'une des revendications précédentes, caractérisée en ce que la plaque inférieure des deux plaques conductrices (65, 80) reposant l'une sur l'autre est réalisée sous la forme d'une plaque à rail électrique (65) qui recouvre les deux éléments redresseurs (40, 41) juxtaposés et contient les rails électriques (66) qui relient les diodes plus et moins (44, 45) des éléments redresseurs (40, 41) par paires avec un branchement de chacune des phases des enroulements (31, 32).

9. Machine électrique d'après la revendication 8, caractérisée en ce que la plaque supérieure des deux plaques conductrices est réalisée sous la forme de couvercle de rails électriques qui recouvre la plaque de rails électriques (6) en forme de demi-cercle (65) ainsi que les régulateurs (42, 43) et la plaque de liaison (70) avec les extrémités de liaison (79) des enroulements d'excitation (14, 15) et contient les rails électriques (81) qui relient les régulateurs (42, 43) avec les bornes de branchement (22) correspondantes de la machine et les branchements des enroulements d'excitation (14, 15).

10. Machine électrique selon la revendication 9, caractérisée en ce que les deux régulateurs (42, 43) sont fixés au couvercle de rails électriques (80) avec les plaques de refroidissement (75, 76).

11. Machine électrique selon la revendication 10, caractérisée en ce que les bornes de branchement (22) sont réalisée sous la forme de vis de branchement (22a, 22b) et sont reliées avec la sortie des branchements B+ et des branchements W installés isolés dans le couvercle de palier (18) et avec les rails électriques (81) du couvercle de rails électriques (80) conduisant au régulateur (42, 43).

12. Machine électrique selon la revendication 9, caractérisée en ce qu'un condensateur (84, 85) est coulé dans le couvercle de rails électriques (80) pour chacun des deux régulateurs (42, 43), condensateur qui est commuté par des rails électriques (81) entre un branchement B+ et un branchement D- des régulateurs (42, 43).

13. Machine électrique selon l'une des revendications 8 à 12, caractérisée en ce qu'au moins une des deux surfaces du couvercle de rails électriques (80) est prévue avec une couche conductrice (80b) reliée avec la masse électrique (boîtier 20) de la machine.
